# EUROPÄISCHE PATENTANMELDUNG

(11) **EP 1 512 478 A1**
(43) Veröffentlichungstag der Anmeldung: **09.03.2005**
(21) Anmeldenummer: 04019640.4
(22) Anmeldetag: 19.08.2004
(51) Int. Cl.: B23C 5/24

(54) **Fräswerkzeug mit einstellbarem Plattensitz**

(30) Priorität: 03.09.2003 DE 10340493
(71) Anmelder: WALTER AG, 72072 Tübingen (DE)
(72) Erfinder: Schaupp, Berthold, 72135 Dettenhausen (DE); Schneider, Thomas, 72145 Hirrlingen (DE)
(74) Vertreter: Patentanwälte Rüger, Barthelt & Abel

(57) **Zusammenfassung**

Ein Fräswerkzeug mit hoher Zähnezahl und guter Präzision weist Plattensitze (5) auf, deren Auflagefläche (17) an einer Keilplatte (16) ausgebildet ist. Die Keilplatte (16) ist innerhalb des Plattensitzes (5) gegen den Werkzeugkörper (3) und die Schneidplatte (2) verstellbar. Eine Befestigungsschraube (14) durchgreift sowohl die Schneidplatte (2) als auch die Keilplatte (16) und spannt beides gegen den Werkzeugkörper (3). Eine Stellschraube (29) dient zur gezielten Verstellung der Keilplatte (16) und somit zur Höheneinstellung der Schneidplatte (2) bzw. deren Schneidkante (12).

## Beschreibung

Die Erfindung betrifft ein Fräswerkzeug, das wenigstens eine einstellbar gelagerte Schneidplatte aufweist.

Bei Fräswerkzeugen, mit denen besonders genaue Bearbeitungen vorzunehmen sind, wird es häufig gewünscht, die Position der einzelnen Schneidplatten so einstellen zu können, dass die Schneidkanten mehrerer, die gleiche Fläche bearbeitender Schneidplatten bei Drehung des Fräswerkzeugs eine gemeinsame Fläche festlegen. Beispielsweise sollen die Umfangsschneidkanten eines Zylinder- oder Scheibenfräsers auf der gleichen Zylinderfläche liegen. Die an einer Stirnseite des Werkzeugkörpers liegenden Schneidkanten sollen möglichst in einer gemeinsamen Ebene liegen.

Es ist bekannt, Schneidplatten beispielsweise mittels verstellbarer Kassetten an einem Werkzeugkörper verstellbar zu lagern. Beispiele solcher Lösungen sind der EP 0 499 280 - B1 zu entnehmen. Die einstellbaren Schneidplatten sind jeweils in einer etwa quaderförmigen Kassette gelagert. Zur Aufnahme der Kassette weist der Werkzeugkörper einen Kassettensitz mit einer geneigten Bodenfläche auf. Ist der Kassettensitz an einer Stirnseite eines scheibenförmigen Werkzeugkörpers angeordnet, ist der betreffende Boden zur Stirnfläche geneigt. Ist der betreffende Kassettensitz hingegen an dem Außenumfang des scheibenförmigen Werkzeugkörpers angeordnet, ist der Boden des Kassettensitzes gegen die Tangente des Werkzeugskörpers geneigt. Eine Verschiebung der Kassette in dem Kassettensitz bewirkt somit im ersten Fall eine Axialverstellung und im zweiten Fall eine Radialverstellung der Schneidplatte. Die Kassette ist mit einer Befestigungsschraube an dem Werkzeugkörper gesichert, die bedarfsweise gelöst werden kann. Die Verschiebung der Kassette wird durch einen Keil bewirkt, der gegen ein stirnseitiges Ende der Kassette drückt und durch eine eigene, ihm zugeordnete Einstellschraube betätigt wird.

Die Kassetten haben einen erheblichen Platzbedarf, wodurch der Abstand aufeinander folgender Schneidplatten ein Mindestmaß nicht unterschreiten kann. Dies beschränkt die Zähnezahl.

Auf der Suche nach effizienten Werkzeugen mit hohen Zerspanungsleistungen werden hohe Zähnezahlen angestrebt. Andererseits wird eine hohe Bearbeitungsgenauigkeit, insbesondere an Flächen angestrebt, die bei dem Fräsvorgang einer Schlichtbearbeitung ausgesetzt sind. Auch im Hinblick auf eine gleichmäßige Schneidplatten- und Schneidkantenabnutzung wird eine genaue Einstellung der nicht an einem Schlichtbearbeitungsvorgang beteiligten Schneidkanten angestrebt, so dass alle beteiligten Schneidplatten möglichst die gleiche Spandicke abheben.

Davon ausgehend ist es Aufgabe der Erfindung, ein Fräswerkzeug mit großer Zähnezahl und einstellbaren Schneidplatten zu schaffen.

Diese Aufgabe wird mit dem Fräswerkzeug nach Anspruch 1 gelöst:

Das erfindungsgemäße Fräswerkzeug weist einen Werkzeugkörper auf, an dem mehrere Schneidplatten gehalten sind. Die Schneidplatten sind vorzugsweise als Lateralplatten oder als Tangentialplatten montiert, d.h. ihre Befestigungsbohrung weist entweder ungefähr in Axialrichtung (Lateralplatte) oder in Radialrichtung (Tangentialplatte). Zwischen der Grundfläche der Schneidplatte, auf der die Befestigungsbohrung der Schneidplatte senkrecht steht, und einer entsprechenden Keilplattenauflagefläche des Werkzeugkörpers ist eine Keilplatte angeordnet, die quer zu der Befestigungsbohrung verschiebbar ist. Durch Verschiebung der Keilplatte kann der Abstand der Grundfläche der Schneidplatte von der Keilplattenauflagefläche und somit die Position der Schneidkante der Schneidplatte geändert werden. Bei Tangentialplatten wird somit eine Radialeinstellung der Schneidplatte vorgenommen. Bei Lateralschneidplatten wird eine Axialeinstellung der Schneidplatten vorgenommen. Die Positionsänderung der Schneidplatte beschränkt sich auf eine Verstellung in Richtung der Befestigungsbohrung. Ansonsten bleibt die Schneidplatte in Bezug auf den Grund- oder Werkzeugkörper am Platz.

Zur Verschiebung der Keilplatten ist zwischen aufeinander folgenden Schneidplatten wenig Platz erforderlich. Der Abstand der Schneidplatten kann deshalb sehr gering gehalten werden, was hohe Zähnezahlen ergibt. Die Abstützung der Sei-- tenflächen der Schneidplatten kann unmittelbar an Stollen des Werkzeugkörpers erfolgen.

Ein wesentlicher Vorzug der Schneidkanteneinstellung mittels der in Bezug auf die Schneidplatten und den Werkzeugkörper verschiebbaren Keilplatten liegt in der Wiederkehrgenauigkeit z.B. beim Wenden einer Wendeschneidplatte. Die Schneidplatte kann von ihrem Plattensitz gelöst und wieder an diesem montiert werden, ohne dass eine erneute Justage erforderlich wäre. Bei ausreichend genau gefertigten Schneidplatten kann auch ein Schneidplattenwechsel ohne erneute Justage der Keilplatte erfolgen. Das Konzept der verstellbaren, zwischen der Grundfläche der Schneidplatte und der Keilplattenauflagefläche sitzenden Keilplatte und der ansonsten direkten Anlage der Seitenflächen der Schneidplatte an Anlageflächen des Werkzeugkörpers ergibt eine hohe Wiederkehrgenauigkeit beim Spannen der Schneidplatten.

Bevorzugterweise ist sowohl die Schneidplatte als auch die Keilplatte mit einer Öffnung versehen, die von einer einzigen Spannschraube durchgriffen ist. Die Spannschraube spannt die Schneidplatte gegen die Keilplatte und diese gegen die Keilplattenauflagefläche. Eine Verstellung der Keilplatte kann nur bei etwas gelöster Spannschraube erfolgen. Ist die Spannschraube angezogen, spannt sie sowohl die Schneidplatte als auch die Keilplatte fest.

Die Keilplattenauflagefläche ist vorzugsweise einige Grad (z.B. 1° bis 10°) gegen eine gedachte Bezugsfläche geneigt, auf der die Schneidplattenbohrung senkrecht steht und die parallel zu der Grundfläche der Schneidplatte ausgerichtet ist. Der betreffende spitze Winkel entspricht dem Keilwinkel der Keilplatte, durch deren Verschiebung eine Höhenverstellung der Schneidplatte bewirkt wird. Der Verstellbereich der Schneidplatte ist vorzugsweise im Bereich von 20 *µ*m bis 30*µ*m festgelegt. Bedarfsweise können jedoch auch größere oder kleinere Verstellbereiche festgelegt werden.

Die Grundfläche der Schneidplatte und die Auflagefläche der Keilplatte sind vorzugsweise Planflächen. Bedarfsweise können sie jedoch auch mit in Verschieberichtung der Keilplatte längs verlaufenden Profilierungen, z.B. Rippen oder Nuten versehen sein. Entsprechendes gilt für die Basisfläche der Keilplatte und die Keilplattenauflagefläche des Werkzeugkörpers. Planflächen werden wegen der sich ergebenden gleichmäßigen Druckverteilung bevorzugt.

Die zur seitlichen Abstützung der Schneidplatte dienenden Anlagefläche sind vorzugsweise unmittelbar an dem Werkzeugkörper ausgebildet. Dies gestattet zum einen eine sehr steife Lagerung der Schneidplatten und zum anderen einen geringen Plattenabstand und somit eine hohe Zähnezahl.

Die Keilplatte wird vorzugsweise in einer Richtung verschoben, die parallel zu der jeweils einzustellenden Schneidkante der Schneidplatte orientiert ist. Dadurch können besonders geringe Schneidplattenabstände erzielt werden. Als Stelleinrichtung zur gezielten Verstellung der Keilplatte können beispielsweise Differentialgewindeschrauben dienen, die mit einem Gewinde in der Keilplatte und mit einem anderen Gewinde in dem Werkzeugkörper sitzen. Weichen die Gewindesteigungen voneinander ab bewirkt ein Drehen dieser Schraube ein Verschieben der Keilplatte. Die Verschiebungsrichtung ist vorzugsweise quer zu der Schneidplatte. Es kann auch eine einfache Befestigungsschraube verwendet werden, die die Keilplatte lediglich in einer Richtung verschieben kann, wenn sie angezogen wird. In diesen beiden genannten Fällen ist die betreffende Schraube längs zur Keilplatte orientiert. Es ist auch möglich, diese quer zur Keilplatte zu orientieren und beispielsweise mit einem Exzenterkopf zu versehen, der die Keilplatte verschiebt.

Weitere Einzelheiten vorteilhafter Ausführungsformen der Erfindung sind Gegenstand der Zeichnung, der Beschreibung oder von Ansprüchen. In der Zeichnung sind Ausführungsbeispiele der Erfindung veranschaulicht. Es zeigen:
- Figur 1: ein Fräswerkzeug mit radial einstellbaren Schneidplatten und mit hoher Zähnezahl in ausschnittsweiser, perspektivischer Darstellung,
- Figur 2: das Fräswerkzeug nach Figur 1 in einer ausschnittsweisen, perspektivischen Darstellung in einem anderen Maßstab,
- Figur 3: das Fräswerkzeug nach Figur 1 in einer ausschnittsweisen Darstellung in Seitenansicht,
- Figur 4: das Fräswerkzeug nach Figur 3 ohne Schneidplatte,
- Figur 5: das Fräswerkzeug nach Figur 1 und 3 in einer Radialansicht,
- Figur 6: das Fräswerkzeug nach Figur 5 ohne Schneidplatte und in teilweise aufgeschnittener Darstellung,
- Figur 7: das Fräswerkzeug nach Figur 5 geschnitten entlang der Linie VII-VII,
- Figur 8: eine abgewandelte Ausführungsform des Fräswerkzeugs entsprechend Figur 7,
- Figur 9: ein Fräswerkzeug mit axial verstellbarer Lateralplatte in schematisierter Frontansicht und
- Figur 10: eine abgewandelte Ausführungsform eines Fräswerkzeugs mit Keilplatte und Exzenterschraube zur Verstellung des Plattensitzes in einer ausschnittsweisen Explosionsdarstellung.

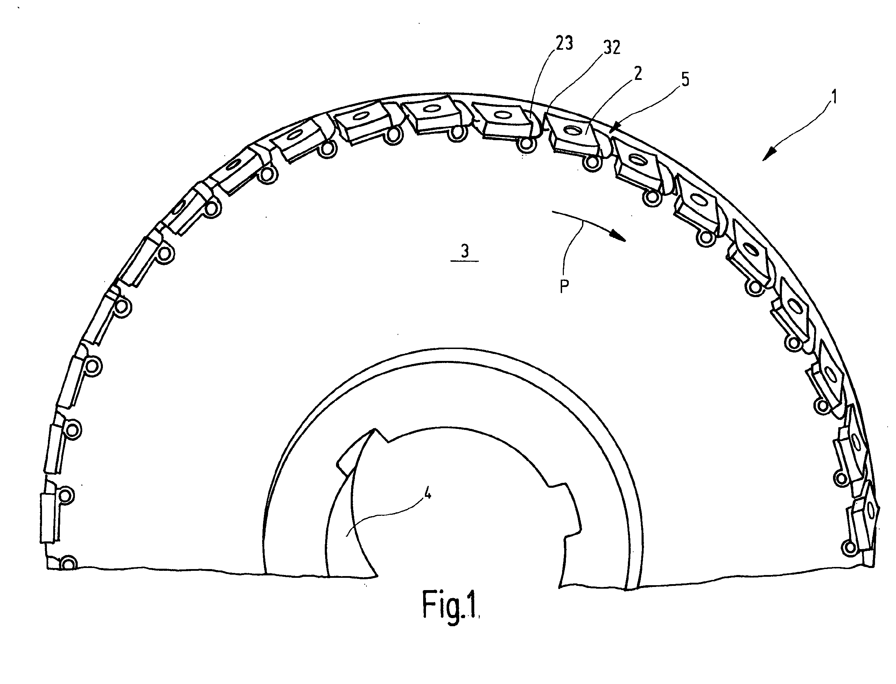

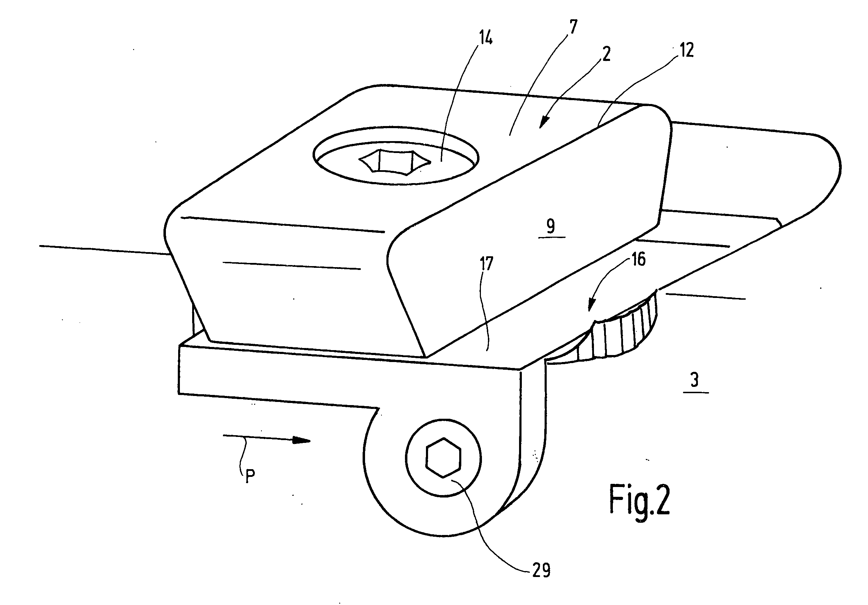

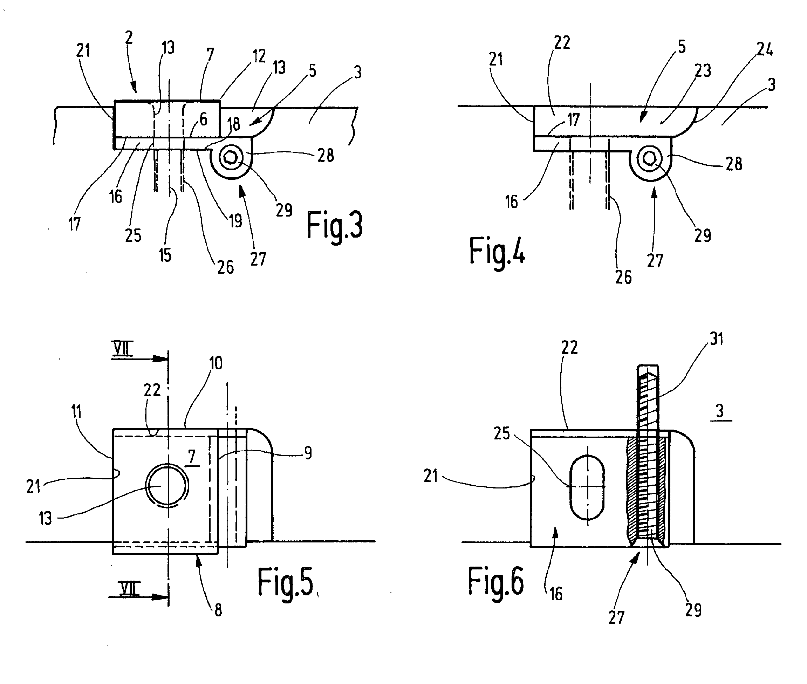

In Figur 1 ist ein Fräswerkzeug 1 veranschaulicht, das als Scheibenfräser ausgebildet ist und eine große Anzahl von tangential angeordneten Schneidplatten 2 aufweist. Zu dem Fräswerkzeug 1 gehört ein scheibenförmiger Werkzeugkörper 3, der mittig mit einer Befestigungseinrichtung für eine Arbeitsspindel, beispielsweise in Form einer Aufnahmebohrung 4 versehen ist. Die Schneidplatten 2 sind an dem Außenumfang des Werkzeugkörpers 3 in entsprechenden Plattensitzen 5 angeordnet, die untereinander gleich ausgebildet sind. Zur Veranschaulichung wird auf Figur 2 bis Figur 6 verwiesen, die nachfolgend in Bezug genommen sind. Die veranschaulichte Schneidplatte 2 weist eine Grundfläche 6 (Figur 3), eine dazu im Wesentlichen parallele Deckfläche 7 und Seitenflächen 8, 9, 10, 11 (Figur 5) auf. Zwischen der Seitenfläche 9 und der Deckfläche 7 ist eine Schneidkante 12 ausgebildet, deren Radialabstand zur Drehachse einzustellen ist. Die Schneidkante 12 verläuft z.B. axial. Rechtwinklig zu der Grundfläche 6 und der Deckfläche 7 durchsetzt eine Befestigungsbohrung 13 die Schneidplatte 2, die zur Aufnahme einer Befestigungsschraube 14 dient. Letztere ist in Figur 3 lediglich durch eine strichpunktierte Linie 15 angedeutet.

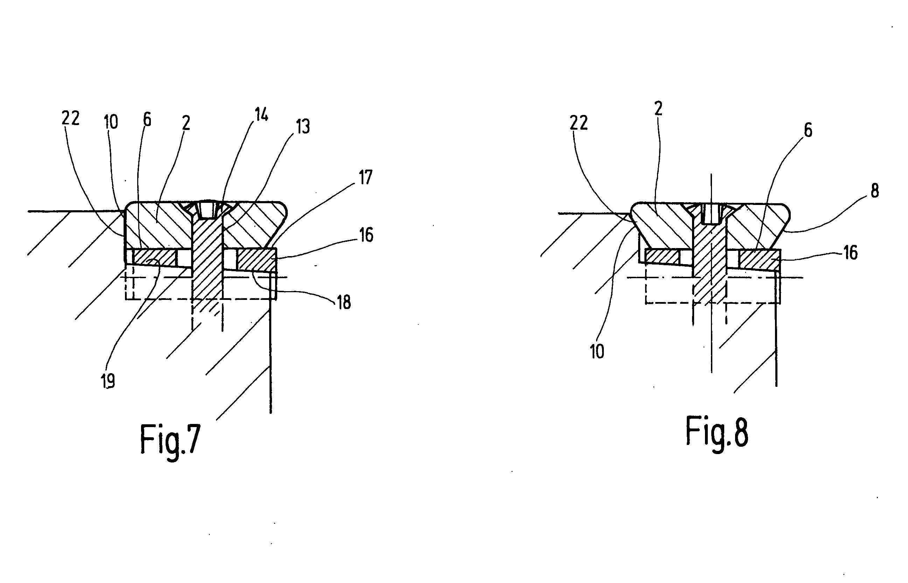

Zu dem Plattensitz 5 gehört eine Keilplatte 16, die eine vorzugsweise ebene, der Schneidplatte 2 zugewandte Auflagefläche 17 aufweist. Ebenfalls vorzugsweise eben ist eine an der unteren Seite der Keilplatte 16 vorgesehene Basisfläche 18 ausgebildet, die an einer Keilplattenauflagenfläche 19 des Grundkörpers 3 anliegt. Die Auflagefläche 17 und die Basisfläche 18 schließen, wie insbesondere Figur 7 veranschaulicht, miteinander einen spitzen Winkel ein, der einige Grad, beispielsweise 3°, beträgt. Die Auflagefläche 17 ist dabei vorzugsweise senkrecht zu der Achse der Befestigungsbohrung 13 orientiert, während die Basisfläche 18 und somit auch die Keilplattenauflagefläche 19 einen von 90° verschiedenen Winkel mit der Achse der Befestigungsbohrung 13 einschließen. Die Keilplatte 16 bildet dabei eine insgesamt flache Platte, deren Dicke geringer ist als die Höhe der Schneidplatte 2. Sie dient lediglich dazu, eine höhenverstellbare Auflagefläche für die Schneidplatte 2 zu schaffen. Sie fügt sich, wie insbesondere Figur 4 erkennen lässt, in den Plattensitz 5 ein, d.h. ihre Auflagefläche 17 bildet zusammen mit an dem Grund- oder Werkzeugkörper 3 vorgesehenen Anlageflächen 21, 22 den Plattensitz 5. Die Keilplatte 16 und deren Auflagefläche 17 erstrecken sich dabei über die Seitenfläche 9 der Schneidplatte 2 hinaus. Die Anlagefläche 17 bildet hier den Boden eines Spanraums 23, der vorzugsweise stufenlos an eine gewölbte Fläche 24 des Grund- oder Werkzeugkörpers 3 anschließt.

Die Keilplatte 16 ist außerdem mit einer Durchgangsöffnung 25 versehen, die gemäß Figur 6 als Langloch ausgebildet ist. Die lange Ausdehnung der Durchgangsöffnung 25 erstreckt sich etwa parallel zu der Schneidkante 12, d.h. parallel zur Verstellrichtung der Keilplatte 16. Sie ist von der Befestigungsschraube 14 durchgriffen, die in eine Gewindebohrung 26 des Grundkörpers 3 eingeschraubt ist.

Zur gezielten Verschiebung oder Verstellung der Keilplatte 16 ist eine Stelleinrichtung 27 vorgesehen, die vorzugsweise unterhalb des Spanraums 23, d.h. außerhalb eines Bereichs der Keilplatte 16 angeordnet ist, der durch die Spannschraube 14 festgeklemmt wird. Zu der Stelleinrichtung 27 gehört ein rohrförmiger Abschnitt 28, der mit der Keilplatte 16 einstückig ausgebildet ist und sich im Wesentlichen außerhalb eines von der Schneidplatte 2 überdeckten Bereichs befindet. Mit anderen Worten, die Keilplattenauflagefläche 19 ist im Wesentlichen so groß wie die Grundfläche 6 der Schneidplatte 2. In Drehrichtung (Pfeil P) vor der Keilplattenauflagefläche 19 ist eine nutartige Ausnehmung ausgebildet, die den rohrförmigen Abschnitt 28 spielarm aufnimmt. Der Abschnitt 28 nimmt außerdem eine Stellschraube 29 auf. Er ist dazu mit einer entsprechenden Bohrung, beispielsweise einer Gewindebohrung versehen. Fluchtend zu dieser ist in dem Grund- oder Werkzeugkörper 3 eine weitere Gewindebohrung 31 ausgebildet, in die sich die Stellschraube 29 hinein erstreckt. Vorzugsweise weisen die Gewinde in dem Abschnitt 28 und in der Gewindebohrung 31 unterschiedliche Steigungen auf. Eine Verdrehung der Stellschraube 29 bewirkt somit eine Axialverschiebung der Keilplatte 16.

Die Einstellung der Radialposition der Schneidkante 12 und somit die radiale Einstellung der Schneidplatten 2 geht wie folgt:

Nachdem der Grundkörper 3 mit den Schneidplatten 2 bestückt ist, werden deren Befestigungsschrauben 14 zunächst leicht, d.h. nicht allzu fest, angezogen. Der Grundkörper 3 wird dann in einer Messeinrichtung aufgenommen. Nacheinander werden'die Schneidplatten 2 nun wie folgt eingestellt. Es wird die Schneidkante 12 angetastet und deren Abstand zur Drehachse bestimmt. Weicht dieser von dem Sollwert ab wird die Stellschraube 29 in entsprechender Richtung gedreht, um die Keilplatte 16 gegen die Schneidplatte 2 und den Werkzeugkörper 3 zu verschieben. Ein Verschieben der Keilplatte 16 in Figur 7 nach links bewirkt eine Vergrößerung des Schneidenradiuses während eine Verschiebung der Keilplatte gemäß Figur 7 nach rechts eine Verringerung des Schneidenradiuses bewirkt. Ist das Sollmaß erreicht wird die Befestigungsschraube 14 festgezogen. Dieser Vorgang wird an allen Schneidplatten 2 wiederholt bis die erforderliche genaue Schneidenpositionierung erreicht ist. Das Fräswerkzeug 1 ist somit einsatzbereit. Wie Figur 1 erkennen lässt, gestattet das Fräswerkzeug 1 eine hohe Zerspanungsleistung wegen der geringen Abstände zwischen den Schneidplatten 2. Die Abstände zwischen diesen sind geringer als die Länge einer Schneidplatte. Die Abstände werden lediglich von der Größe der erforderlichen Spanräume 23 und der minimalen Breite von an dem Grundkörper 3 ausgebildeten Stollen 32 bestimmt, die die Anlageflächen 21 tragen. Zwischen zwei Schneidplatten 2 befinden sich somit lediglich jeweils ein Spanraum 23 und ein Stollen 32.

Die Schneidplatten 2 sind auswechselbar gehalten. Zum Auswechseln werden lediglich die Befestigungsschrauben 14 gelöst und die Schneidplatten 2 getauscht. Bei ausreichend genauer Schneidplattenfertigung (z.B. wenn die Schneidplatten aus der gleichen Charge stammen) ist keine erneute Justage erforderlich. Sind die Schneidplatten als Wendeschneidplatten ausgebildet, wie es Figur 8 veranschaulicht, ist auch das Wenden der Schneidplatte 2 ohne erneute Justage der Keilplatte 16 möglich. Die Schneidplatte 2 nach Figur 8 ist eine Wendeschneidplatte, deren Seitenflächen 8, 10 übereinstimmende Neigungen zur Grundfläche 6 aufweisen. Die einzelnen Plattensitze werden nach dem Bestücken des Grundkörpers 3 mit Schneidplatten 2 radial justiert, so dass alle Schneidkanten auf dem gleichen Durchmesser liegen. Sind die Schneidkanten abgearbeitet, werden die Befestigungsschrauben 14 gelöst und jede Schneidplatte 2 wird auf ihrem Plattensitz gewendet und wieder befestigt. Eine erneute Justage ist nicht erforderlich und zwar auch dann nicht, wenn die einzelnen Schneidplatten 2 aufgrund ihrer Fertigungstoleranz untereinander nicht ohne erneute Justage austauschbar wären.

Bei einer vereinfachten Ausführungsform des Fräswerkzeugs 1 ist an Stelle der mit unterschiedlichen Gewinden versehenen Stellschraube 29 (Figur 6) eine Stellschraube mit lediglich einem Gewinde vorgesehen, das den rohrförmigen Abschnitt 28 mit Spiel durchgreift und in die Gewindebohrung 31 eingeschraubt ist. Durch Anziehen dieser Stellschraube kann dann ein Verstellen der Keilplatte 16 in einer Richtung bewirkt werden, wobei die Verstellung endet wenn das gewünschte Sollmaß erreicht ist. Eine Rückwärtsbewegung der Keilplatte 16 ist dann nur durch völliges Lösen der Befestigungsschraube 14 und Zurückschieben der Keilplatte 16 von Hand möglich. Diese vereinfachte Ausführungsform ist für die weitaus meisten Anwendungsfälle ausreichend.

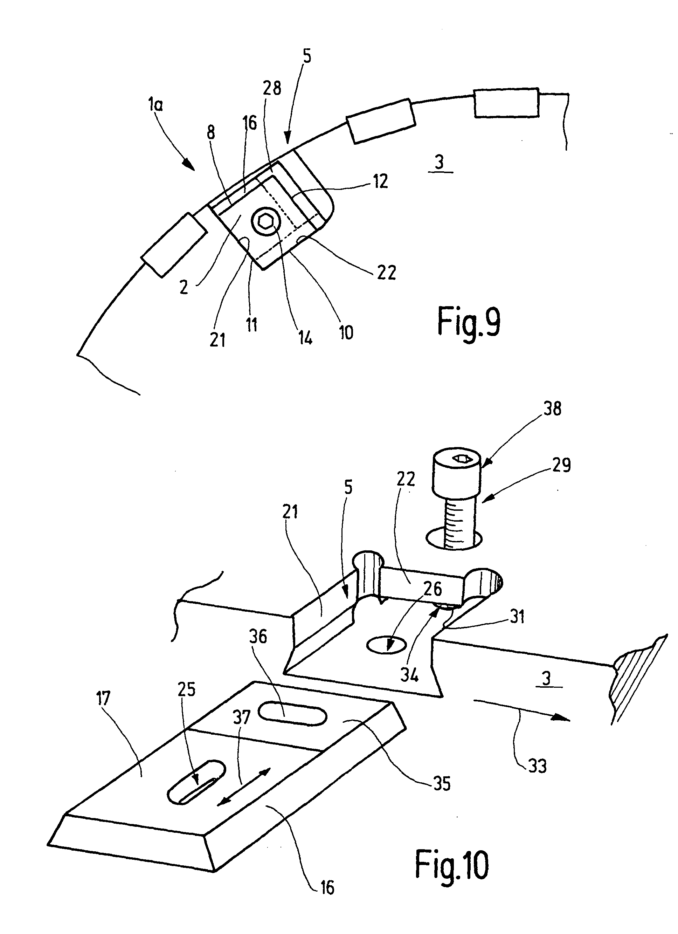

In Figur 9 ist ein Fräswerkzeug 1a veranschaulicht, bei dem eine Schneidplatte 2 als axial einstellbare Lateralplatte vorgesehen ist. Der dazu an der Flachseite des Grundkörpers 3 angeordnete Plattensitz 5 weist ebenfalls die Keilplatte 16 zur Verstellung der Höhenposition (hier Axialposition) der Schneidplatte 2 auf. Ansonsten wird unter Zugrundelegung gleicher Bezugszeichen auf die vorstehende Beschreibung verwiesen.

Während die Keilplatte 16 bei den vorstehend beschriebenen Ausführungsbeispielen durch eine im Wesentlichen parallel zum Keil verlaufende Stellschraube 29 verstellt worden ist, die neben dem Keilabschnitt der Keilplatte angeordnet ist, kann die Stelleinrichtung 27 auch in einer Flucht vor oder hinter dem Keilabschnitt der Keilplatte 16 vorgesehen sein. Bei dem Ausführungsbeispiel nach Figur 10, bei dem bau- oder funktionsgleiche Teile oder Elemente unter Verweis auf die vorstehende Beschreibung mit gleichen Bezugszeichen versehen sind, ist die Keilplatte 16 nach Art einer Schwalbenschwanzführung aufgebaut. Die Richtung ihrer Dickenzunahme ist wiederum quer zur Bewegungsrichtung und Schneidkante, der nicht weiter veranschaulichten Schneidplatte orientiert. Zur Verdeutlichung ist die durch die Drehung des Grundkörpers 3 vorgegebene Bewegungsrichtung in Figur 10 durch einen Pfeil 33 angedeutet. Neben dem eigentlichen Plattensitz 5 ist in dem Grund- oder Werkzeugkörper 3 ein Schacht 34 ausgebildet, in den sich ein Fortsatz 35 der Keilplatte 16 hinein erstreckt. Dieser Fortsatz hinterschneidet die seitliche Anlagefläche 22. Er ist mit einem Langloch 36 versehen, das quer zu der längs zum Keil verlaufenden Verstellrichtung 37 orientiert ist. Dem Langloch 36 ist die Stellschraube 29 zugeordnet, die hier mit einem Exzenterkopf 38 versehen ist. Dieser sitzt in montiertem Zustand in dem Langloch 36 und weist einen Durchmesser auf, der der in Verstellrichtung 37 gemessenen Breite des Langlochs 36 entspricht. Eine Verdrehung der Stellschraube 29 bewirkt somit eine Längsverstellung der Keilplatte 16 und somit eine Verstellung der Höhe der Auflagefläche 17. Entsprechend wird die Radialposition oder Axialposition der Schneidplatte verstellt, je nach dem ob diese als Tangentialplatte oder als Lateralplatte eingesetzt wird.

Ein Fräswerkzeug mit hoher Zähnezahl und guter Präzision weist Plattensitze 5 auf, deren Auflagefläche 17 an einer Keilplatte 16 ausgebildet ist. Die Keilplatte 16 ist innerhalb des Plattensitzes 5 gegen den Werkzeugkörper 3 und die Schneidplatte 2 verstellbar. Eine Befestigungsschraube 14 durchgreift sowohl die Schneidplatte 2 als auch die Keilplatte 16 und spannt beides gegen den Werkzeugkörper 3. Eine Stellschraube 29 dient zur gezielten Verstellung der Keilplatte 16 und somit zur Höheneinstellung der Schneidplatte 2 bzw. deren Schneidkante 12.

## Patentansprüche

1. Fräswerkzeug (1)
mit einem Werkzeugkörper (3), der wenigstens ein Befestigungsmittel zur Verbindung mit einer drehend angetriebenen Arbeitsspindel aufweist,
mit wenigstens einem an dem Werkzeugkörper (3) ausgebildeten Plattensitz (5) zur Aufnahme einer Schneidplatte (2), die eine Grundfläche (6), Seitenflächen (8, 9, 10, 11) und eine Deckfläche (7) aufweist, wobei der Plattensitz (5) eine Keilplattenauflagefläche (17) aufweist,
mit einer Keilplatte (16), die eine mit der Grundfläche (6) der Schneidplatte (2) in Berührung stehende Auflagefläche (17) sowie eine im spitzen Winkel zu dieser angeordnete Basisfläche (18) aufweist, die mit der Keilplattenauflagefläche (19) in Berührung steht, wobei die Keilplatte (16) zwischen der Grundfläche (6) der Schneidplatte (2) und der Keilplattenauflagefläche (19) des Plattensitzes (5) verschiebbar angeordnet ist, und
mit einer Stelleinrichtung (27) zur gezielten Verschiebung der Keilplatte (16) in Bezug auf die Schneidplatte (2) und den Werkzeugkörper (3).

2. Fräswerkzeug nach Anspruch 1, **dadurch gekennzeichnet, dass** die Schneidplatte (2) mit einer Befestigungsbohrung (13) versehen ist, die die Grundfläche (6) der Schneidplatte (2) im Wesentlichen senkrecht durchsetzt und der eine in der Keilplatte (16) ausgebildete Durchgangsöffnung (25) sowie eine in dem Werkzeugkörper (3) ausgebildete Gewindebohrung (26) zugeordnet sind.

3. Fräswerkzeug nach Anspruch 2, **dadurch gekennzeichnet, dass** die Größe der Durchgangsöffnung (25) den Durchmesser einer Befestigungsschraube (14) für die Schneidplatte (2) übersteigt.

4. Fräswerkzeug nach Anspruch 1, **dadurch gekennzeichnet, dass** die Grundfläche (6) und die Auflagefläche (17) Planflächen sind.

5. Fräswerkzeug nach Anspruch 1, **dadurch gekennzeichnet, dass** die Basisfläche (18) und die Keilplattenauflagefläche (19) Planflächen sind.

6. Fräswerkzeug nach Anspruch 1, **dadurch gekennzeichnet, dass** der von der Basisfläche (18) und der Auflagefläche (17) eingeschlossene spitze Winkel zwischen 1° und 10° liegt.

7. Fräswerkzeug nach Anspruch 1, **dadurch gekennzeichnet, dass** an dem Werkzeugkörper (3) an dem Plattensitz (5) wenigstens eine Anlagefläche (21, 22) zur Abstützung einer Seitenfläche (10, 11) der Schneidplatte (2) ausgebildet ist.

8. Fräswerkzeug nach Anspruch 1, **dadurch gekennzeichnet, dass** zu der Stelleinrichtung (27) ein die Keilplatte (16) durchgreifendes Stellorgan (29) gehört.

9. Fräswerkzeug nach Anspruch 8, **dadurch gekennzeichnet, dass** das Stellorgan (29) eine Stellschraube ist, die einen seitlich an die Keilplatte (16) angeformten Rohrabschnitt (28) durchsetzt.

10. Fräswerkzeug nach Anspruch 8, **dadurch gekennzeichnet, dass** das Stellorgan (29) eine Stellschraube mit einem Exzenterkopf (38) ist, der ein an der Keilplatte (16) ausgebildetes Langloch (36) durchgreift.
